(19) Europäisches Patentamt
European Patent Office
Office européen des brevets

(11) **EP 3 771 210 A1**

(12) **EUROPEAN PATENT APPLICATION**

(43) Date of publication:
**27.01.2021 Bulletin 2021/04**

(21) Application number: **20165941.4**

(22) Date of filing: **26.03.2020**

(51) Int Cl.:
*H04N 19/114* (2014.01)  *H04N 19/124* (2014.01)
*H04N 19/136* (2014.01)  *H04N 19/142* (2014.01)
*H04N 19/146* (2014.01)  *H04N 19/172* (2014.01)
*H04N 19/177* (2014.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.07.2019 US 201916519945**

(71) Applicant: **INTEL Corporation
Santa Clara, CA 95054 (US)**

(72) Inventors:
• **LEE, Sang-hee
San Jose, CA 95129 (US)**
• **ZHANG, Ximin
San Jose, CA 95129 (US)**
• **ROWE, Keith
Shingle Springs, CA 95682 (US)**

(74) Representative: **HGF
1 City Walk
Leeds LS11 9DX (GB)**

(54) **CONTENT AND QUANTIZATION ADAPTIVE CODING STRUCTURE DECISIONS FOR VIDEO CODING**

(57) Techniques related to group of picture structures for video coding are discussed. Such techniques include selecting a group of picture size for a set of pictures using a temporal correlation categorization and an estimated quantization parameter corresponding to the set of pictures such that the temporal correlation categorization is based on a measure of non-coefficient bits for encode of the set of pictures or a reference set of pictures.

FIG. 1

**Description**

BACKGROUND

In video compression / decompression (codec) systems, compression efficiency and video quality are important performance criteria. For example, visual quality is an important aspect of the user experience in many video applications and compression efficiency impacts the amount of memory storage needed to store video files and/or the amount of bandwidth needed to transmit and/or stream video content. For example, a video encoder compresses video information so that more information can be sent over a given bandwidth or stored in a given memory space or the like. The compressed signal or data may then be decoded via a decoder that decodes or decompresses the signal or data for display to a user. In most implementations, higher visual quality with greater compression is desirable.

In current video coding standards including AVC (H.264 or MPEG-4 Part 10, Advanced Video Coding (MPEG-4 AVC)), HEVC (H.265 or MPEG-H Part 2, High Efficiency Video Coding), VP9 and AV1 (AOMedia Video 1), the encoding process typically employs a hierarchical like random access (RA) coding structure for high quality video coding applications. With RA, the encoding uses, for pictures of the video, a different encode order with respect to display order such that multiple level bidirectional prediction can be used. Typically, a fixed group of picture (GOP) structure is selected by application and utilized for the entire encoding process. For example, HEVC HM (the HEVC test model) uses a GOP size of 8 as the default RA structure.

In the context of fixed GOP encode structures, a fixed larger GOP size does not always provide higher quality. For example, in low bitrate encodings, frame skip is sometimes needed to meet hypothetical reference decoder (HRD) compliancy. Since the encoding order is different from the display order, if the skip frame happens earlier in the encoding order than a subsequent non-skip frame and the skip frame is displayed after the same non-skip frame, visually annoying jittering occurs. To avoid such jittering, all the low level frames in the hierarchy have to be skipped. As a result, the viewer will observe unsmooth jerky motion with stop and go like movement. Although less annoying than jittering, the viewing experience is still not pleasant.

On the other hand, a smaller GOP size cannot fully utilize the advantage of bidirectional prediction offered by larger GOP sizes and thereby provides lower quality for scenes and in particular, relatively static scenes.

It may be advantageous to improve GOP size selection to provide improved compression efficiency and/or video quality. It is with respect to these and other considerations that the present improvements have been needed. Such improvements may become critical as the desire to compress and transmit video data becomes more widespread.

BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:

FIG. 1 is an illustrative diagram of an example system for video coding;

FIG. 2 is an illustrative diagram of exemplary input video;

FIG. 3 is an illustrative diagram of exemplary GOP size generation for a set of pictures;

FIG. 4 is a flow diagram illustrating an example process for providing a temporal correlation categorization for a set of pictures;

FIG. 5 is a flow diagram illustrating an example process for generating a GOP size for a set of pictures;

FIG. 6 illustrates an example coding structure with a GOP size of 8 for encoding input video;

FIG. 7 illustrates an example coding structure with a GOP size of 4 for encoding input video;

FIG. 8 illustrates an example coding structure with a GOP size of 2 for encoding input video;

FIG. 9 illustrates an example coding structure with a GOP size of 1 for encoding input video;

FIG. 10 is an illustrative diagram of a subsequent exemplary GOP size generation for a set of pictures;

FIG. 11 is a flow diagram illustrating an example process for video coding including GOP size selection;

FIG. 12 is an illustrative diagram of an example system for video coding including GOP size selection;

FIG. 13 is an illustrative diagram of an example system; and

FIG. 14 illustrates an example device, all arranged in accordance with at least some implementations of the present disclosure.

DETAILED DESCRIPTION

One or more embodiments or implementations are now described with reference to the enclosed figures. While specific configurations and arrangements are discussed, it should be understood that this is done for illustrative purposes only. Persons skilled in the relevant art will recognize that other configurations and arrangements may be employed without departing from the spirit and scope of the description. It will be apparent to those skilled in the relevant art that techniques and/or arrangements described herein may also be employed in a variety of other systems and applications other than what is described herein.

While the following description sets forth various implementations that may be manifested in architectures such as system-on-a-chip (SoC) architectures for example, implementation of the techniques and/or arrangements described herein are not restricted to particular architectures and/or computing systems and may be implemented by any architecture and/or computing system for similar purposes. For instance, various architectures employing, for example, multiple integrated circuit (IC) chips and/or packages, and/or various computing devices and/or consumer electronic (CE) devices such as set top boxes, smart phones, etc., may implement the techniques and/or arrangements described herein. Further, while the following description may set forth numerous specific details such as logic implementations, types and interrelationships of system components, logic partitioning/integration choices, etc., claimed subject matter may be practiced without such specific details. In other instances, some material such as, for example, control structures and full software instruction sequences, may not be shown in detail in order not to obscure the material disclosed herein.

The material disclosed herein may be implemented in hardware, firmware, software, or any combination thereof. The material disclosed herein may also be implemented as instructions stored on a machine-readable medium, which may be read and executed by one or more processors. A machine-readable medium may include any medium and/or mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others.

References in the specification to "one implementation", "an implementation", "an example implementation", etc., indicate that the implementation described may include a particular feature, structure, or characteristic, but every embodiment may not necessarily include the particular feature, structure, or characteristic. Moreover, such phrases are not necessarily referring to the same implementation. Further, when a particular feature, structure, or characteristic is described in connection with an embodiment, it is submitted that it is within the knowledge of one skilled in the art to effect such feature, structure, or characteristic in connection with other implementations whether or not explicitly described herein.

Methods, devices, apparatuses, computing platforms, and articles are described herein related to video coding and, in particular, to content and quantization parameter adaptive coding structure decisions for video coding.

As described above, in modern video coding standards, hierarchical like random access coding structures may be employed that use constant GOP sizes. However, a fixed GOP size may disadvantageously provide lower video quality and/or lower compression rates depending on context. In some embodiments, a content and quantization parameter (QP) adaptive GOP structure decision scheme (e.g., a GOP size decision) is provided for improved video quality and/or compression. In some embodiments, for a number of temporally consecutive pictures such as a number of temporally consecutive pictures of a maximum GOP size, a GOP size decision is made based on a temporal correlation categorization corresponding to the pictures and an estimated QP corresponding to the pictures. The temporal correlation categorization may be generated using a set of pictures immediately temporally prior to the pictures (e.g., that have already been encoded) or at least some of the pictures themselves (e.g., using a simplified look ahead encode based on highly downsampled pictures and a constant QP encode). The estimated QP for the pictures may be determined based on previously encoded pictures (e.g., using the previous QP).

The GOP size is then generated using the estimated QP and the temporal correlation categorization such that, in general, a smaller GOP size is selected in response to very high QP or low temporal correlation categorization and a larger GOP size is selected in response to low higher temporal correlation categorization, as is discussed further herein.

The discussed temporal correlation categorization for the pictures is generated, as discussed, using a set of immediately temporally prior pictures or at least some of the pictures themselves (if look ahead encode is provided). Such look ahead encode techniques may offer the advantages of accuracy at the costs of increased processing costs and potential pipeline delays. Such look ahead encode techniques include a large downsample (e.g., from 4k video to 360x240 video) and then simplified encode (e.g., constant QP encode) for the sake of speed and limiting computational resources. In either case, the temporal correlation categorization is based on temporal correlation values generated for each of the set of pictures such that that each temporal correlation value is based on a measure of non-coefficient bits for encoding each picture and a quantization parameter for each picture such that the non-coefficient bits are all bits for encoding each picture exclusive of transform coefficient bits. As used herein, the term non-coefficient bits indicates a number of bits or bit count for encoding a picture that includes all bits exclusive of transform coefficient bits (e.g., all bits minus transform coefficient bits). For example, outside of the transform coefficient bits, such bits include block partitioning bits, block prediction mode bits, motion vector bits, picture parameter set bits, and header bits. Such bits outside of the transform coefficient bits may generally include any bits allowed by a codec for decode of the picture of video. It is noted that such number of bits or bit count is after all encode operations and represent fully compressed bits representing the picture of video. The term transform coefficient bits indicates the number of bits used to encode a picture that are dedicated to or include transform coefficient bits such that the bits are representative of quantized, transformed, and coded (e.g., entropy encoded) pixel residuals (e.g., for those blocks that are inter- or intra-prediction coded) and pixel values (e.g., for those blocks that are coded without prediction).

For example, the non-coefficient bits may employ a Non_Coefficient_Bits statistics based method to estimate the temporal correlation. The Non-Coefficient-Bits statistics may be obtained, as discussed, from a historic video analysis scheme (e.g., analyzing previously encoded video pictures) or look ahead analysis (e.g., downsampling and performing a simplified encode of the pictures of interest). In some embodiments, a history quantization-based decision advantageously avoids the jittering and jerky artifacts discussed herein. In some embodiments, by combining the temporal correlation categorization and history-based QP decision, the GOP structure is decided for a next segment of input video as is discussed further herein.

Using the discussed techniques, different GOP structures (e.g., sizes) may be used for different video clips and different video segments in the same video clip with the same resolution even if the compression ratio is same. During encode, the GOP structure can advantageously change on the fly for different segments of video if the contents show different temporal correlation and a quantization condition is satisfied. Compared to the HEVC HM like default GOP structure, the discussed techniques adaptively select the GOP structure based on the contents and actual encoding conditions for improved video quality (both subjective and objective) and compression.

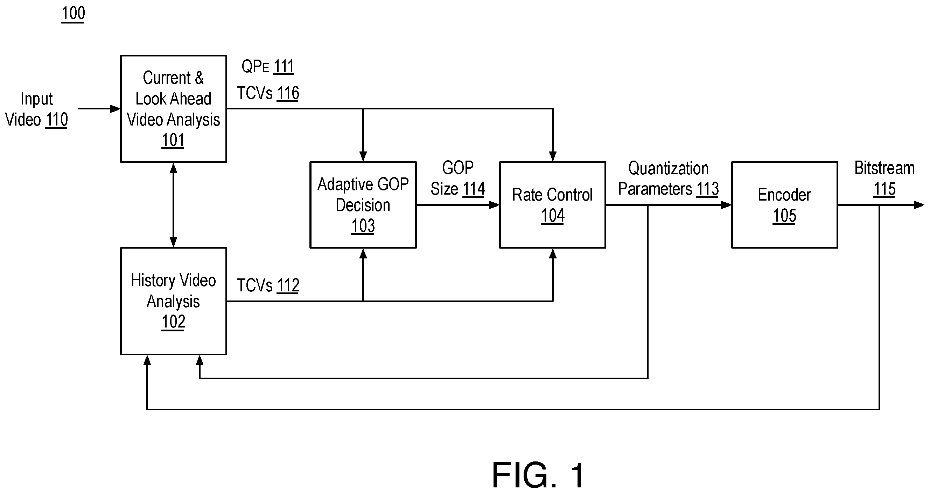

FIG. 1 is an illustrative diagram of an example system 100 for video coding, arranged in accordance with at least some implementations of the present disclosure. As shown in FIG. 1, system 100 includes a current and look ahead video analysis module 101, a history video analysis module 102, an adaptive GOP decision module 103, a rate control module 104, and an encoder 105. For example, system 100 may receive input video 110 for coding and system 100 may provide video compression to generate a bitstream 115 such that system 100 may be a video encoder implemented via a computer or computing device or the like. Notably, a decoder (not shown) may reconstruct a decoded version of input video 110 for presentment to a user. Bitstream 115 may be any suitable bitstream such as a standards compliant bitstream. For example, bitstream 115 may be any of AVC, HEVC, VP9, or AV1 compliant.

System 100 may be implemented via any suitable device such as, for example, a personal computer, a laptop computer, a tablet, a phablet, a smart phone, a digital camera, a gaming console, a wearable device, an all-in-one device, a two-in-one device, or the like or a platform such as a mobile platform or the like. For example, as used herein, a system, device, computer, or computing device may include any such device or platform. System 100 may include other modules or components not shown for the sake of clarity of presentation. For example, system 100 may include a partition module, a transform module, a quantization module, an intra prediction module, a motion estimation module, a motion compensation module, a sample adaptive offset (SAO) filtering module, a scanning module, etc., which may be implemented at least in part via encoder 105.

As discussed, system 100 receives input video 110. Input video 110 may include any suitable video frames, video pictures, sequence of video frames, group of pictures, groups of pictures, video data, or the like in any suitable resolution. For example, the video may be video graphics array (VGA), high definition (HD), Full-HD (e.g., 1080p), 4K resolution video, 8K resolution video, or the like, and the video may include any number of video frames, sequences of video frames, pictures, groups of pictures, or the like. Techniques discussed herein are discussed with respect to video pictures for the sake of clarity of presentation. However, such pictures may be characterized as frames, video frames, sequences of frames, video sequences, etc. For example, a picture or frame of color video data may include a luminance plane or component and two chrominance planes or components at the same or different resolutions with respect to the luminance plane. Input video 110 may include pictures or frames that may be divided into blocks of any size, which contain data corresponding to blocks of pixels. Such blocks may include data from one or more planes or color channels of pixel data.

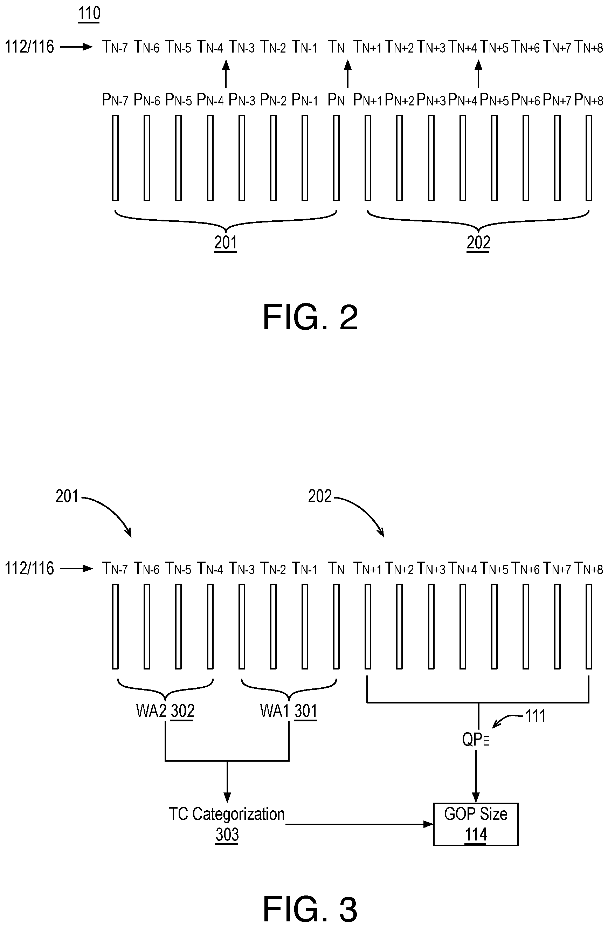

FIG. 2 is an illustrative diagram of exemplary input video 110, arranged in accordance with at least some implementations of the present disclosure. Input video 110 may include any video sequence or clip such as a VGA, HD, Full-HD, 4K, 8K, etc. video frame. As shown, input video 110 includes a set of pictures 201 and a set of pictures 202. Set of pictures 201 includes pictures $P_{N-7}$ through $P_N$ such that set of pictures 201 are in a temporal order to be displayed in the order $P_{N-7}$, $P_{N-6}$, ... $P_{N-1}$, $P_N$. As used herein, the term temporal order indicates a display order such that prior pictures are to be displayed before subsequent pictures and the term immediately prior or subsequent indicates no intervening pictures are provided between the pictures. Similarly, as shown, set of pictures 202 includes pictures $P_{N+1}$ through $P_{N+8}$ such that set of pictures 202 are in a temporal order to be displayed in the order $P_{N+1}$, $P_{N+2}$, ... $P_{N+7}$, $P_{N+8}$.

In the context of the following discussion, a GOP structure decision is being made set of pictures 202 while set of pictures 201 have been previously encoded and, therefore, encoding information is known for set of pictures 202. In some embodiments, the GOP structure decision for set of pictures 202 is made using only information corresponding to set of pictures 201 (e.g., using only historical data). In other embodiments, the GOP structure decision for set of pictures 202 is made using look ahead information generated using set of pictures 202 (e.g., downsampling and encode). In some embodiments, both historical and look ahead information is used. However, in some embodiments, if look ahead information is generated or available, historical data is discarded.

Returning to FIG. 1, as shown, input video 110 is received by current and look ahead video analysis module 101, which, when implemented, generates temporal correlation values (TCVs) 116 for set of pictures 202 such that each picture of set of pictures 202 has a corresponding temporal correlation value 116. Furthermore, current and look ahead video analysis module 101 generates an estimated quantization parameter ($QP_E$) 111 for set of pictures 202. In addition or in the alternative, history video analysis module 102 receives bitstream 115 and history video analysis module 102 generates temporal correlation values (TCVs) 112 for set of pictures 201. As shown, temporal correlation values 116, temporal correlation values 112, and estimated quantization parameter 111, as applicable, are provided to adaptive GOP decision module 103 and rate control module 104. As shown, rate control module 104 generates quantization parameters 113 for encode of input video 110 by encoder 105. Furthermore, quantization parameters 113 are provided to history video analysis module 102 for use in generating temporal correlation values 112 as is discussed further herein below.

Adaptive GOP decision module 103 utilizes temporal correlation values 116, temporal correlation values 112, and estimated quantization parameter 111, as available, to generate a GOP size 114 for set of pictures 202. For example, GOP size 114 may define a GOP structure in the context of the codec being applied by system 100 as is discussed further herein. As discussed, in general adaptive GOP decision module 103 selects a small GOP size in response to a very large estimated quantization parameter 111 or low temporal correlation and a bigger GOP size in response to higher temporal correlation.

Discussion now turns to GOP structure decisions based only on historical video analysis. With reference to FIG. 2, a GOP size 114 is generated for set of pictures 202 using only information from set of pictures 201. As shown in FIG. 2, for set of pictures 202 ($P_{N-7}$-$P_N$), history video analysis module 102 generates corresponding temporal correlation values 112 $T_{N-7}$-$T_N$. In such on historical video analysis only contexts, $T_{N+1}$-$T_{N+8}$ temporal correlation values 116 are not available. Instead, a temporal correlation categorization for set of pictures 202 is generated using temporal correlation values 112.

It is noted that set of pictures 202 may include any number of pictures. In some embodiments, set of pictures 202 include a number of pictures equal to a maximum available GOP size (e.g., based on the coded) or set maximum GOP size setting (e.g., user selected or predefined). In some embodiments, the maximum available GOP size or set maximum GOP size setting is 16 pictures. In some embodiments, the maximum available GOP size or set maximum GOP size setting is 8 pictures, as illustrated. However, any maximum available GOP size or set maximum GOP size setting may be applied.

Furthermore, set of pictures 201 may include any number of pictures such as the same number as set of pictures 202. In some embodiments, set of pictures 201 includes 8 pictures. In some embodiments, a temporal correlation categorization of set of pictures 202 is based on weighted averages of temporal correlation values of subsets of set of pictures 201 such as two subsets. Alternatively, the temporal correlation categorization of set of pictures 202 is based on a weighted average of temporal correlation values of all of set of pictures 201.

As used herein, the term temporal correlation value indicates a value for a picture that is indicative of motion or other temporal variation between the picture and one or more reference pictures. Typically, herein, term temporal correlation values are higher for frames having low temporal correlation (e.g., large motion or other large variations between pictures) while lower temporal correlation values are indicative of higher temporal correlation (e.g., low motion and variation between pictures).

In some embodiments, each temporal correlation value for set of pictures 201 is based on actual encoding generated information. For each encoded picture of set of pictures 201, the corresponding bits generated by the encode for each picture include transform coefficient bits, block partitioning bits, block prediction mode bits, motion vector bits, PPS (picture parameter set) bits, and other header bits. Other bits may be used based on the codec being implemented such as bits indicating filter sets, sample adaptive offsets, and so on. Herein, non-coefficient bits (Non_Coefficient_Bits) represent the sum of all non transform coefficient bits as discussed above. Notably, use of resolution normalized Non_Coefficient_Bits provides a measurement of the temporal correlation between the current picture and its reference pictures. Based on this observation, a temporal correlation value and, ultimately, a temporal correlation categorization technique is provided as follows.

In some embodiments, after encode of each picture N of set of pictures 201, a measure or number of non-coefficient bits are attained. As discussed, the measure or number of non-coefficient bits includes all bits for encoding each picture exclusive of transform coefficient bits (e.g., all bits other than transform coefficient bits). Herein, the non-coefficient bits or non-transform coefficient bits are labeled Non_Coefficient_Bits. Furthermore, the picture level QP for each picture N used during encode is attained. Based on the Non_Coefficient_Bits and the QP for each picture, a temporal correlation value is generated. In some embodiments, the temporal correlation value is generated as shown in Equation (1):

$$T(N) = f(QP) * Non\_Coefficient\_Bits(N)/Video\_resolution$$

$$(1)$$

where $T(N)$ is the temporal correlation value for picture N, QP is the picture level QP for picture N, f is a monotonically increasing function of QP, Non_Coefficient_Bits is the measure or number of non-coefficient bits for picture N, and Video_resolution is the resolution of picture N (i.e., the resolution of input video 101).

As shown in Equation (1), in some embodiments, the temporal correlation value for picture N is generated as a product of the measure of non-coefficient bits and a resultant value from a monotonically increasing function applied to a quantization parameter, divided by a resolution of the video. As discussed, function f is a monotonically increasing function of QP such that it returns large values for large QP values and small values for small QP values. Such techniques provide for the value of $f(QP) * Non\_Coefficient\_Bits(N)$ to be relatively stable for a picture no matter what QP is used in the encode. The function may be any monotonically increasing function such as a step function. In an embodiment, f(QP) is implemented using a look up table. In an embodiment, the function f may be generated based on empirical testing.

FIG. 3 is an illustrative diagram of exemplary GOP size 114 generation for set of pictures 202, arranged in accordance with at least some implementations of the present disclosure. As shown in FIG. 3, a temporal correlation (TC) categorization 303 corresponding to set of pictures 202 is generated using immediately temporally prior set of pictures 201, as is further discussed below. Furthermore, estimated quantization parameter 111 is determined for set of pictures 202. Estimated quantization parameter 111 may be generated using any suitable technique or techniques. In an embodiment, estimated quantization parameter 111 is the average of the picture level QP used to encode a number of immediately temporally prior pictures such as 2 or 4 pictures. In an embodiment, estimated quantization parameter 111 is the average of the picture level QP used to encode pictures $P_N$ and $P_{N-1}$.

Discussion now turns to the generation of temporal correlation categorization 303. In the following discussion, temporal correlation values 112 are used to generate multiple (e.g., 2) weighted averages 301, 302 and weighted averages 301, 302 are, in turn, used to generate temporal correlation categorization 303. Such techniques may improve the stability of the GOP structure decision. In other embodiments, only a single weighted average of temporal correlation values 112 is used.

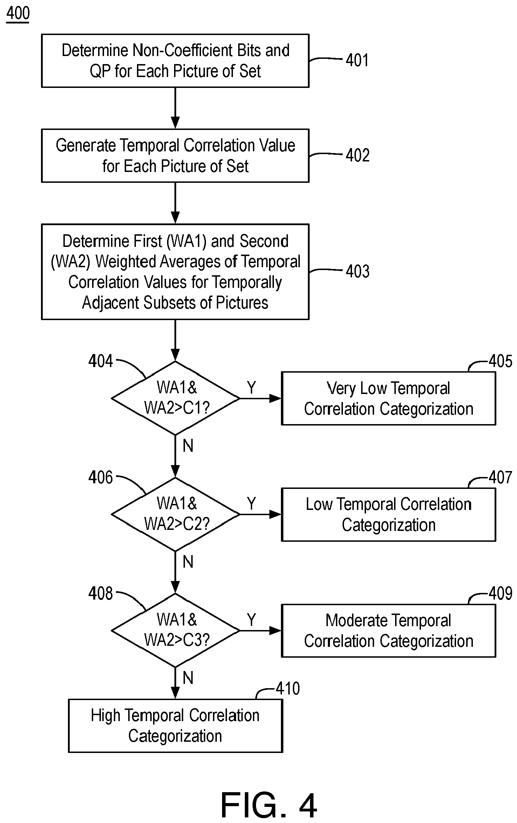

FIG. 4 is a flow diagram illustrating an example process 400 for providing a temporal correlation categorization for set of pictures 202, arranged in accordance with at least some implementations of the present disclosure. Process 400 may include one or more operations 401-410 as illustrated in FIG. 4. Process 400 may be performed by a device (e.g., system 100 as discussed herein) to encode input video.

Processing begins at operation 401, where non-coefficient bits and a QP are determined for each picture of a set of pictures as discussed above. Processing continues at operation 402, where a temporal correlation value (e.g., $T_N$) is generated for each picture of the set of pictures as discussed above. In the following, set of pictures 201 is being used to generate a temporal correlation categorization for set of pictures 202.

Processing continues at operation 403, where first (WA1) and second (WA2) weighted averages of the temporal correlation values are generated for subsets of the set of pictures such that the subsets include temporally immediately adjacent pictures and the subsets are immediately adjacent to one another. In some embodiments, the weighted averages are determined as shown in Equations (2):

$$WA1 = (T(N)*w0 + T(N-1)*w1 + T(N-2)*w2 + T(N-3)*w3)/W$$

$$WA2 = (T(N-4)*w0 + T(N-5)*w1 + T(N-6)*w2 + T(N-7)*w3)/W$$

$$(2)$$

where T represents the temporal correlation values as discussed above, WA1 is the first weighted average (which may also be characterized as Temporal_Correlation1), WA2 is the second weighted average (which may also be characterized as Temporal_Correlation2), w0, w1, w2, and w3 are weights such that W= w0+wl+w2+w3 and w0>= w1>= w2>= w3. For example, more recent temporal correlation values are weighted more highly than more temporally distant temporal correlation values.

Processing continues at decision operation 404, where a determination is made as to whether both the first and second weighted averages of the temporal correlation values compare favorably to (e.g., exceed) a first threshold C1 (e.g., a first temporal correlation threshold). If so, processing continues at operation 405, where the temporal correlation categorization is set to very low temporal correlation.

If not, processing continues at decision operation 406, where a determination is made as to whether both the first and second weighted averages of the temporal correlation values compare favorably to (e.g., exceed) a second threshold C2 (e.g., a second temporal correlation threshold) such that the first threshold is greater than the second threshold. If so, processing continues at operation 407, where the temporal correlation categorization is set to low temporal correlation.

If not, processing continues at operation decision 408, where a determination is made as to whether both the first and second weighted averages of the temporal correlation values compare favorably to (e.g., exceed) a third threshold C3 (e.g., a third temporal correlation threshold) such that the second threshold is greater than the third threshold. If so, processing continues at operation 409, where the temporal correlation categorization is set to moderate temporal correlation.

If not, processing continues at operation 410, where the temporal correlation categorization is set to high temporal correlation.

As used herein, the terms very low, low, moderate, and high, as used with respect to temporal correlation, are relative terms used to rank the temporal correlation of pictures with respect to their reference pictures and temporally adjacent pictures. As the labels indicate, very low temporal correlation indicates higher motion and other temporal changes, low temporal correlation indicates high, but lesser, motion and other temporal changes, moderate temporal correlation indicates medium motion and other temporal changes, and high temporal correlation indicates low motion and other temporal changes. Such terms are therefore inverse with respect to the discussed temporal correlation values and corresponding weighted averages as indicated by the thresholding performed in process 400. The thresholds C1, C2, C3 may be any suitable values based on the codec, resolution, etc. being applied and such thresholds C1, C2, C3 may be empirically determined. In an embodiment, thresholds C1, C2, C3 have a linearly increasing relationship.

In some embodiments, a scene change look ahead analysis is provided for set of pictures 202 and any detected scene change causes a very low temporal correlation categorization at operation 405. In some embodiments, the temporal correlation categorizations provided at operations 405, 407, 409 correspond to all pictures in set of pictures 201. In other embodiments, each subset of pictures (e.g., subset $P_{N-7}$ through $P_{N-4}$ and subset $P_{N-3}$ through $P_N$) may be separately categorized. For example, if, at decision operation 406, WA1 exceeds threshold C2 and WA2 does not, the subset $P_{N-7}$ through $P_{N-4}$ may be categorized as low temporal correlation while the subset $P_{N-3}$ through $P_N$ may be categorized as moderate temporal correlation (without regard to processing at operation 408), or vice versa. Similarly if, at decision operation 408, WA1 exceeds threshold C2 and WA2 does not, the subset $P_{N-7}$ through $P_{N-4}$ may be categorized as moderate temporal correlation while the subset $P_{N-3}$ through $P_N$ may be categorized as high temporal correlation, or vice versa.

As discussed, in some embodiments, only a single weighted average of temporal correlation values is generated. For example, only weighted average WA1 may be generated (e.g., using 4 pictures) or an analogous weighted average using any number of pictures may be generated for set of pictures 202. In such embodiments, decision operations 404, 406, and 408 may be applied only to the single weighted average such that if the weighted average exceeds threshold C1, the temporal correlation categorization is set to very low temporal correlation, if the weighted average exceeds threshold C2, the temporal correlation categorization is set to low temporal correlation, if the weighted average exceeds threshold C3, the temporal correlation categorization is set to moderate temporal correlation, and otherwise, the temporal correlation categorization is set to high temporal correlation.

Furthermore, although discussed with respect to four temporal correlation categorization, any number of temporal correlation categorizations such as three (low, moderate, high) may be employed.

With reference to FIG. 3, temporal correlation categorization 303 corresponding to set of pictures 202 and generated using set of pictures 201, is used, along with estimated quantization parameter 111 to generate GOP size 114 as is discussed below. Such techniques use only historical picture encode data to generate temporal correlation categorization 303.

In addition or in the alternative, look ahead analysis may be used to generate temporal correlation categorization 303. For example, all or some of set of pictures 202 may be downsampled and encoded to generate a measure of non-coefficient bits for such pictures. In the following discussion, all of set of pictures 202 are processed. However, in other embodiments, only a first subset (e.g., pictures $P_{N+1}$ through $P_{N+4}$) may be processed. In some embodiments, both look ahead and historical analysis are used. For example, the pictures used to generate temporal correlation categorization 303 may at least partially temporally overlap set of pictures 202. As used herein, sets of pictures at least partially overlap when one or more pictures are in both sets. As used herein, a full overlap occurs when all pictures are in both sets. For example, temporal correlation categorization 303 may be generated using temporal correlation values for only set of pictures 202.

In an embodiment, a measure of non-coefficient bits for a picture of set of pictures 202 is generated by downsampling each picture and performing an encode of the downsampled pictures. Such downsampling may advantageously be substantial and the encode may advantageously be simplified to quickly generate the measures of non-coefficient bits for a picture using low computational resources and power. For example, the downsampling may downsample 4k video (or any other resolution) to 360x240 video. For example, the downsampling ratio may be about 10x in both the horizontal and vertical directions. In some embodiments, the downsampling ratio is not less than 4 in both the horizontal and vertical directions. In some embodiments, the downsampling ratio is not less than 8 in both the horizontal and vertical directions. In some embodiments, the downsampling ratio is not less than 10 in both the horizontal and vertical directions. Furthermore, the encode may be simplified by applying a constant QP encode or using other techniques such as limiting intra and motion searches, limiting or eliminating block partitioning, and so on.

A temporal correlation value may then be determined for a picture of set of pictures 202 as discussed with respect to Equation (1) such that T(N) is the temporal correlation value for picture N, QP is the picture level QP for picture N (e.g., a constant picture level QP constant QP encode), f is a monotonically increasing function of QP, Non_Coefficient_Bits is the measure or number of non-coefficient bits for picture N generated using the encode at the lower resolution, and Video_resolution is the resolution of picture N at the lower resolution used for encode (i.e., the resolution of the downsampled video).

Based on such temporal correlation values $T_{N+1}$ through $T_{N+8}$ (please refer to FIGS. 2 and 3), temporal correlation categorization 303 or a temporal correlation categorization analogous to temporal correlation categorization 303 is generated using $T_{N+1}$ through $T_{N+8}$ (and, optionally, $T_{N-7}$ through $T_N$ or a subset thereof such as $T_{N+3}$ through $T_N$) using techniques discussed with respect to FIG. 4.

In an embodiment, a look ahead weighted average of the temporal correlation values ($T_{N+1}$ through $T_{N+8}$) is for set of pictures 202. In an embodiment, look ahead weighted average of the temporal correlation values is determined as shown in Equation (3):

$$\text{LAWA} = (T(N+1)*w0 + T(N+2)*w1 + T(N+3)*w2 + T(N+4)*w3 + T(N+5)*w4 + T(N+6)*w5 + T(N+7)*w6 + T(N+8)*w7)/W$$

$$(3)$$

where T represents the temporal correlation values as discussed above, LAWA is look ahead weighted average of the temporal correlation values, w0, w1, w2, w3, w4, w5, w6, and w7 are weights such that W= w0+w1+w2+w3+w4+w5+w6+w7 and w0>= w1>= w2>= w3>= w4>= w5>= w6>=w7. In an embodiment, w0= w1= w2= w3= w4= w5= w6= w7.

With reference to FIG. 4, the look ahead weighted average is compared to thresholds C1, C2, and C3 as discussed above. For example, if the look ahead weighted average exceeds threshold C1, the temporal correlation categorization is set to very low temporal correlation, if the look ahead weighted average exceeds threshold C2, the temporal correlation categorization is set to low temporal correlation, if the look ahead weighted average exceeds threshold C3, the temporal correlation categorization is set to moderate temporal correlation, and otherwise, the temporal correlation categorization is set to high temporal correlation.

In some embodiments, multiple look ahead weighted averages, such as LAWA1 and LAWA2 as generated for, for example, pictures $P_{N+1}$ through $P_{N+4}$ and $P_{N+5}$ through $P_{N+8}$, respectively are compared to thresholds C1, C2, and C3 as discussed above. In some embodiments, a look ahead weighted average (e.g., for pictures $P_{N+1}$ through $P_{N+8}$ or $P_{N+1}$ through $P_{N+4}$) and a historical weighted average (e.g., WA1 or a WA for pictures $P_{N-7}$ through $P_N$) are compared to thresholds C1, C2, and C3 as discussed above.

Thereby, temporal correlation categorization 303 is generated for set of pictures 202 based on only set of pictures 201 (historical pictures in that they are temporally prior and already encoded), only set of pictures 202 (look ahead pictures in that they include and are temporally subsequent to a current picture and have not been fully encoded), or a combination thereof.

Discussion now turns to generating a GOP size (structure) for set of pictures 202 using temporal correlation categorization 303 and estimated quantization parameter 111.

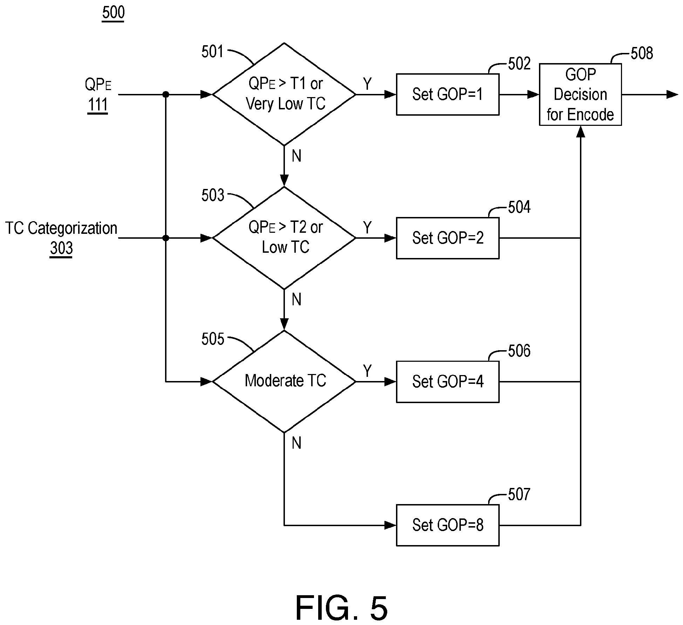

FIG. 5 is a flow diagram illustrating an example process 500 for generating a GOP size for set of pictures 202, arranged in accordance with at least some implementations of the present disclosure. Process 500 may include one or more operations 501-508 as illustrated in FIG. 5. Process 500 may be performed by a device (e.g., system 100 as discussed herein) to encode input video.

Processing begins at decision operation 501, where a determination is made as to whether estimated quantization parameter 111 compares favorably to (e.g., exceeds) a first QP threshold T1 or temporal correlation categorization 303 is a very low temporal correlation categorization. If so, processing continues at operation 502 where a GOP size is set to one for set of pictures 202.

If not, processing continues at decision operation 503, where a determination is made as to whether estimated quantization parameter 111 compares favorably to (e.g., exceeds) a second QP threshold T2, which is less than first QP threshold T1, or temporal correlation categorization 303 is a low temporal correlation categorization. If so, processing continues at operation 504 where a GOP size is set to two for set of pictures 202.

If not, processing continues at decision operation 505, where a determination is made as to whether temporal correlation categorization 303 is a moderate temporal correlation categorization. If so, processing continues at operation 506 where a GOP size is set to four for set of pictures 202. If not, processing continues at operation 507, where a GOP size is set to eight for set of pictures 202 (e.g., temporal correlation categorization 303 is a high temporal correlation categorization).

As shown, in an embodiment, GOP sizes are to one at operation 502, two at operation 504, four at operation 506, and eight at operation 507. In other embodiments, GOP sizes are applied such that the GOP size set at operation 502 is less than the GOP size set at operation 504, the GOP size set at operation 504 is less than the GOP size set at operation 506, and the GOP size set at operation 506 is less than the GOP size set at operation 507. In an embodiment, the GOP sizes are one, four, eight, and sixteen respectively. The first and second QP thresholds may be any suitable values. In an embodiment, the first threshold is not less than 80% of a maximum available QP provided by the codec being used. In an embodiment, the first threshold is not less than 70% of a maximum available QP provided by the codec being used. In an embodiment, the second threshold is in the range of 70-80% of the first threshold. In an embodiment, the first threshold is not less than 80% and the second threshold is not less than 60% of a maximum available QP provided by the codec being used.

As shown, process 500 applies a small GOP size (e.g., of one or two) when there is very low or temporal correlation or very high or high QP and larger GOP size (e.g., of four or eight) when there is moderate or high temporal correlation and at least a moderate QP. Processing continues at operation 508, where the GOP size decision set at operations 502, 504, 506, 507 is used for encode.

In some embodiments, the GOP size is used to encode all pictures of set of pictures 202. In other embodiments, as discussed further with respect to FIG. 2, a temporally first subset of set of pictures 202 is encoded using the GOP size and a new GOP size decision is made for a temporally second subset of set of pictures 202 (and additional pictures of input video 110). In an embodiment, when the GOP size divided by the size of set of pictures 202 is equal to or less than a threshold such as 0.25, only a first subset of a particular size (e.g., half the set of pictures 202) is encoded using the GOP size and the remaining subset is subject to another GOP size decision. When the GOP size divided by the size exceeds the threshold, the GOP size is used for the entirety of set of pictures 202.

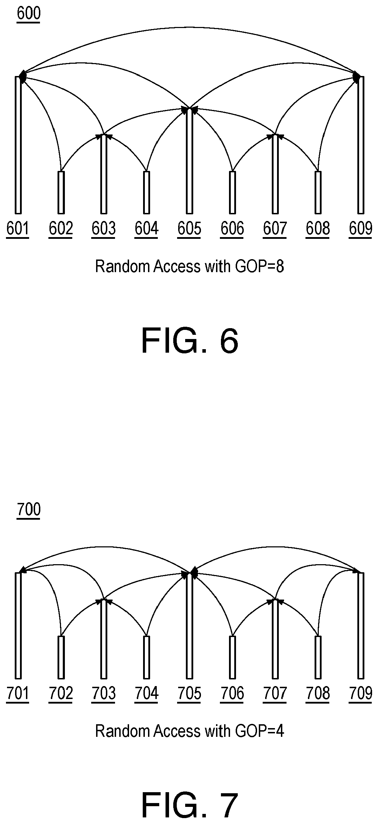

FIG. 6 illustrates an example coding structure 600 with a GOP size of 8 for encoding input video 110, arranged in accordance with at least some implementations of the present disclosure. As shown in FIG. 6 for a single reference in each direction coding structure, coding structure 600 with a GOP size of 8 provides for inter-prediction dependencies (illustrated by arrows) such that picture 609 can reference only picture 601, picture 605 can reference only pictures 601, 609, picture 603 can reference pictures 601, 605, and so on. For multiple reference coding structures, each picture can have multiple references. For example, picture 603 can reference pictures 601, 605, 609, and so on. Coding structure 600 also provides a coding order for pictures 601-609 as follows: picture 601, picture 609, picture 605, picture 603, picture 602, picture 604, picture 607, picture 606, picture 608. Furthermore, coding structure 600 provides for approximate bit allocations for pictures 601-609 that are shown by their relative heights such that pictures 601, 609 have a highest bit allocation, picture 605 has a high bit allocation, pictures 603, 607 have a moderate bit allocation, and pictures 602, 604, 606, 608 have a lowest bit allocation. Such bit allocations attempt to provide higher quality for those pictures used more often as reference pictures. Pictures 601-609 may have any suitable picture types that are allowed and syntax pertinent for the coded being implemented. For example, picture 601 may be an I-picture or generalized B picture and pictures 602-609 may be generalized B picture in some contexts. As discussed coding structure 600 may be applied by encoder 105 during encode of set of pictures 202 when a GOP size of 8 is set at operation 507.

FIG. 7 illustrates an example coding structure 700 with a GOP size of 4 for encoding input video 110, arranged in accordance with at least some implementations of the present disclosure. As shown in FIG. 7, for a single reference in each direction coding structure, coding structure 700 with a GOP size of 4 provides for inter-prediction dependencies such that picture 705 can reference only picture 701, picture 703 can reference only pictures 701, 705, picture 702 can reference only pictures 701, 703, picture 704 can reference only pictures 703, 705, picture 709 can reference only 705, and so on. For multiple reference, each picture can have multiple references. For example, picture 702 can reference pictures 701,703, 705. Coding structure 700 also provides a coding order for pictures 701-709 as follows: picture 701, picture 705, picture 703, picture 702, picture 704, picture 709, picture 707, picture 706, picture 708. Furthermore, coding structure 700 provides for approximate bit allocations for pictures 701-709 that are shown by their relative heights such that pictures 701, 705, 709 have a high bit allocation, pictures 703, 707 have a moderate bit allocation, and pictures 702, 704, 706, 708 have a lowest bit allocation. As with pictures 601-609, pictures 701-709 may have any suitable picture types that are allowed and syntax pertinent for the coded being implemented.

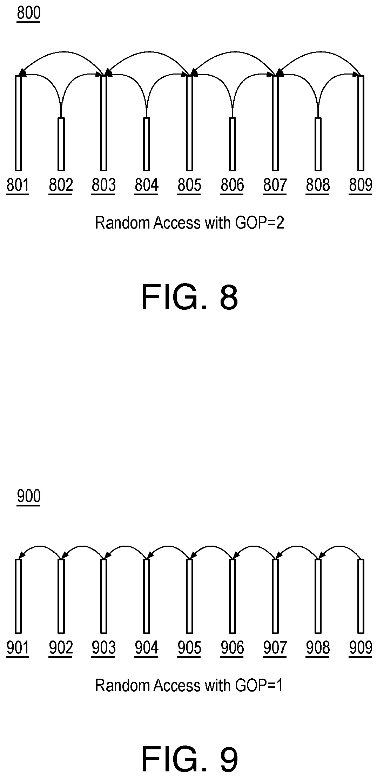

FIG. 8 illustrates an example coding structure 800 with a GOP size of 2 for encoding input video 110, arranged in accordance with at least some implementations of the present disclosure. As shown in FIG. 8 for a single reference in each direction coding structure, coding structure 800 with a GOP size of 2 provides for inter-prediction dependencies such that picture 803 can reference only picture 801, picture 802 can reference only pictures 801, 803, picture 805 can reference only picture 803, picture 804 can reference only pictures 803, 805, and so on. For multiple reference, each picture can have multiple references. For example, picture 804 can reference pictures 801,803, 805, and so on. Notably, with respect to GOP size of 8 or 4, bidirectional inter prediction is not available for pictures 803, 805, 807. Coding structure 800 also provides a coding order for pictures 801-809 as follows: picture 801, picture 803, picture 802, picture 805, picture 804, picture 807, picture 806, picture 809, picture 808. Furthermore, coding structure 800 provides for approximate bit allocations for pictures 801-809 that are shown by their relative heights such that pictures 801, 803, 805, 807, 809 have a high bit allocation and pictures 802, 804, 806, 808 have a low bit allocation. Pictures 801-809 may have any suitable picture types that are allowed and syntax pertinent for the coded being implemented.

FIG. 9 illustrates an example coding structure 900 with a GOP size of 1 for encoding input video 110, arranged in accordance with at least some implementations of the present disclosure. As shown in FIG. 9 for single reference coding structure, coding structure 900 with a GOP size of 1 provides for inter-prediction dependencies such that picture can only reference pictures that temporally precede it. Notably, GOP size 1 does not provide for any bidirectional inter prediction. Furthermore, for GOP size 1, the coding order of pictures 901-909 follows the temporal order thereof. Also, coding structure 900 provides for constant approximate bit allocations for pictures 901-909 as indicated by the matching heights thereof. Pictures 901-909 may have any suitable picture types that are allowed and syntax pertinent for the coded being implemented.

For example, coding structures 600, 700, 800, 900 may provide a hierarchical random access coding structure in the context of a standardized codec such as AVC, HEVC, VP9, or AV1.

As discussed, in some embodiments, the applied GOP size is used to encode a temporally first subset of set of pictures 202 (of a size equal to the GOP size or a multiple thereof) is encoded using the GOP size and a new GOP size decision is made for a temporally second subset of set of pictures 202 (and additional pictures of input video 110).

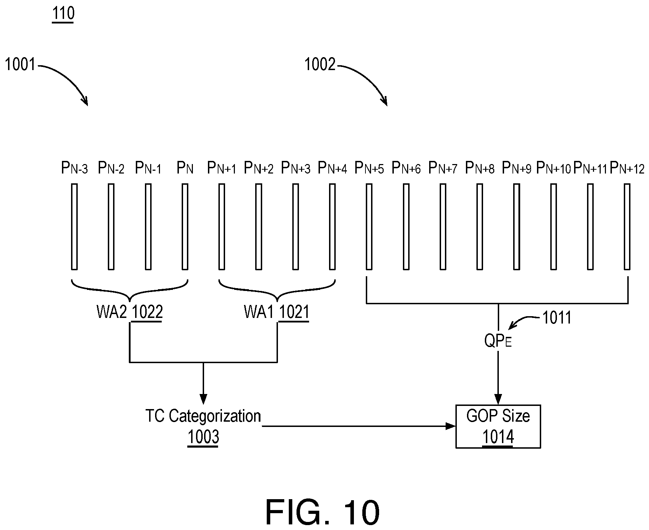

FIG. 10 is an illustrative diagram of a subsequent exemplary GOP size 1014 generation for set of pictures 1002, arranged in accordance with at least some implementations of the present disclosure. As shown in FIG. 10, for a subsequent portion of input video 110, a set of pictures 1001 is provided akin to set of pictures 201 such that set of pictures 1001 includes pictures $P_{N-3}$ to $P_{N+4}$. Notably, pictures $P_N$ to $P_{N+4}$ have been encoded based on previous GOP size 114 (e.g., a 1, 2 or 4 GOP size) and are now included in set of pictures 1001 while pictures $P_{N+5}$ to $P_{N+8}$ were not encoded based on previous GOP size 114 but are instead now included in set of pictures 1002, for which GOP size 1014 is still pending. That is, pictures $P_{N+5}$ to $P_{N+8}$ will be encoded using GOP size 1014. Such a cascading structure may advantageously provide for more opportunities to transition to advantageously larger GOP sizes as temporal correlation increases.

In the context of FIG. 10, processing may be performed using any techniques discussed herein to generate temporal correlation (TC) categorization 1003 for set of pictures 1002 including generation of temporal correlation values (not shown, please refer to FIGS. 2 and 3) for past set of pictures 1001, look ahead set of pictures 1002, or both, determining one or more weighted averages of the temporal correlation values such as weighted average (WA1) 1021, weighted average (WA2) 1022, and/or a look ahead weighted average as discussed herein, determining an estimated quantization parameter 1011 for set of pictures 1002 (e.g., as an average of the picture level QPs used to encode pictures $P_{N+3}$ and $P_{N+4}$), and determining temporal correlation categorization 1003 as discussed with respect to process 400 and elsewhere herein. Furthermore, GOP size 1014 may then be determined using temporal correlation categorization 1003 and estimated quantization parameter 1011 as discussed with respect to process 500.

Such cascading processing may then be applied as discussed above, for example, when the GOP size divided by the size of set of pictures 1002 is equal to or less than, for example, one-quarter of the size of set of pictures 1002.

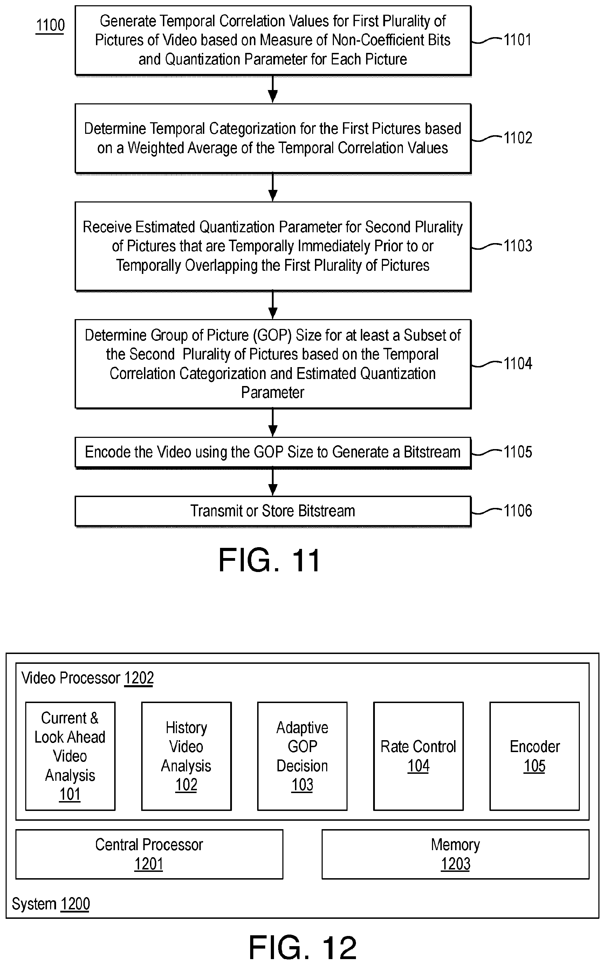

FIG. 11 is a flow diagram illustrating an example process 1100 for video coding including GOP size selection, arranged in accordance with at least some implementations of the present disclosure. Process 1100 may include one or more operations 1101-1106 as illustrated in FIG. 11. Process 1100 may form at least part of a video coding process. By way of non-limiting example, process 1100 may form at least part of a video coding process as performed by any device or system as discussed herein such as system 100. Furthermore, process 1100 will be described herein with reference to system 1200 of FIG. 12.

FIG. 12 is an illustrative diagram of an example system 1200 for video coding including GOP size selection, arranged in accordance with at least some implementations of the present disclosure. As shown in FIG. 12, system 1200 may include a central processor 1201, a video processor 1202, and a memory 1203. Also as shown, video processor 1202 may include or implement current and look ahead video analysis module 101, history video analysis module 102, adaptive GOP decision module 103, rate control module 104, and encoder 105. Furthermore, in the example of system 1200, memory 1203 may store video data or related content such as picture data, non-coefficient bits, temporal correlation values, temporal correlation categorizations, QPs, GOP size data, bitstream data, and/or any other data as discussed herein.

As shown, in some embodiments, current and look ahead video analysis module 101, history video analysis module 102, adaptive GOP decision module 103, rate control module 104, and encoder 105 are implemented via video processor 1202. In other embodiments, one or more or portions of current and look ahead video analysis module 101, history video analysis module 102, adaptive GOP decision module 103, rate control module 104, and encoder 105 are implemented via central processor 1201 or another processing unit such as an image processor, a graphics processor, or the like.

Video processor 1202 may include any number and type of video, image, or graphics processing units that may provide the operations as discussed herein. Such operations may be implemented via software or hardware or a combination thereof. For example, video processor 1202 may include circuitry dedicated to manipulate pictures, picture data, or the like obtained from memory 1203. Central processor 1201 may include any number and type of processing units or modules that may provide control and other high level functions for system 1200 and/or provide any operations as discussed herein. Memory 1203 may be any type of memory such as volatile memory (e.g., Static Random Access Memory (SRAM), Dynamic Random Access Memory (DRAM), etc.) or non-volatile memory (e.g., flash memory, etc.), and so forth. In a non-limiting example, memory 1203 may be implemented by cache memory.

In an embodiment, one or more or portions of current and look ahead video analysis module 101, history video analysis module 102, adaptive GOP decision module 103, rate control module 104, and encoder 105 are implemented via an execution unit (EU). The EU may include, for example, programmable logic or circuitry such as a logic core or cores that may provide a wide array of programmable logic functions. In an embodiment, one or more or portions of current and look ahead video analysis module 101, history video analysis module 102, adaptive GOP decision module 103, rate control module 104, and encoder 105 are implemented via dedicated hardware such as fixed function circuitry or the like. Fixed function circuitry may include dedicated logic or circuitry and may provide a set of fixed function entry points that may map to the dedicated logic for a fixed purpose or function.

Returning to discussion of FIG. 11, process 1100 may begin at operation 1101, where, for each picture of a first plurality of pictures of video, a temporal correlation value is generated. The first plurality of pictures may include any number of pictures such as four or eight. In some embodiments, the first plurality of pictures may be separate from a second plurality of pictures that are to be encoded (e.g., the first plurality of pictures may be a reference set of pictures) using a selected GOP size such that the first plurality of pictures are already encoded pictures. In some embodiments, the first plurality of pictures at least partially overlap the second plurality of pictures that are to be encoded using a selected GOP size. In some embodiments, the second plurality of pictures that are to be encoded and the first plurality of pictures are the same pictures.

In some embodiments, each temporal correlation value is based on a measure of non-coefficient bits for encoding each picture of the first plurality of pictures and a quantization parameter for each picture. In some embodiments, the measure of non-coefficient bits includes all bits for encoding each picture exclusive of transform coefficient bits. In some embodiments, each temporal correlation value is a product of the measure of non-coefficient bits and a resultant value from a monotonically increasing function applied to the quantization parameter, divided by a resolution of the video. In some embodiments, all bits for encoding each picture exclusive of the transform coefficient bits include block partitioning bits, block prediction mode bits, motion vector bits, picture parameter set bits, and header bits.

Processing continues at operation 1102, where a temporal correlation categorization of the first plurality of pictures is determined based on a first weighted average of the temporal correlation values. In some embodiments, the second plurality of pictures are temporally immediately following the first plurality of pictures and process 1100 further includes determining, for each picture of a third plurality of pictures of the video temporally immediately preceding the first plurality of pictures, a second temporal correlation value, each second temporal correlation value based on a measure of non-coefficient bits for encoding each picture and a projected quantization parameter for each picture such that the measure of non-coefficient bits comprises all bits for encoding each picture exclusive of transform coefficient bits. In some embodiments, generating the temporal correlation categorization for the first plurality of pictures is further based on a second weighted average of the second temporal correlation values.

In some embodiments, the temporal correlation categorization is very low temporal correlation in response to the first and second weighted averages exceeding a first threshold, low temporal correlation in response to the first and second weighted averages exceeding a second threshold, moderate temporal correlation in response to the first and second weighted averages exceeding a third threshold, or high temporal correlation in response to the first and second weighted averages not exceeding the third threshold, such the first threshold is greater than the second threshold, and the second threshold is greater than the third threshold. In some embodiments, the second plurality of pictures and the third plurality of pictures consist of four pictures each.

In some embodiments, the second plurality of pictures is at least partially temporally overlapping the first plurality of pictures and the measure of non-coefficient bits for encoding each picture is generated by downsampling each of the first plurality of pictures by at least a downsampling ratio of 8 in the horizontal and vertical directions and encoding each of the downsampled first plurality of pictures via a constant quantization parameter encode. As discussed, in some embodiments, the first and second plurality of pictures are the same plurality of pictures.

Processing continues at operation 1103, where an estimated quantization parameter for the second plurality of pictures of the video is received. As discussed, the second plurality of pictures is one of temporally immediately following the first plurality of pictures or temporally at least partially overlapping the first plurality of pictures. The estimated quantization parameter may be generated using any suitable technique or techniques. In an embodiment, the estimated quantization parameter is an average of the quantization parameter for a number of most recently encoded pictures such as two pictures. In an embodiment, the estimated quantization parameter is an average quantization parameter of the last two most recently encoded pictures of the first plurality of pictures.

Processing continues at operation 1104, where a group of picture size is determined for at least a subset of the second plurality of pictures based on the temporal correlation categorization of the first plurality of pictures and the estimated quantization parameter for the second plurality of pictures. In some embodiments, the temporal correlation categorization is very low temporal correlation in response to the first weighted average exceeding a first threshold, low temporal correlation in response to the first weighted average exceeding a second threshold, or moderate temporal correlation in response to the first and second weighted averages exceeding a third threshold, and the group of picture size is a first value in response to a very low temporal correlation categorization or the estimated quantization parameter exceeding a first quantization parameter threshold, a second value in response to a low temporal correlation categorization or the estimated quantization parameter exceeding a second quantization parameter threshold, or a third value in response to a moderate temporal correlation categorization, such that the first value is less than the second value, the second value is less than the third value, and the first quantization parameter threshold is greater than the second quantization parameter threshold. In some embodiments, the first value is one, the second value is two, and the third value is four. In some embodiments, the first value is one, the second value is four, and the third value is eight. In some embodiments, the temporal correlation categorization is high temporal correlation in response to the first weighted average not exceeding the third threshold, and the group of picture size is a fourth value, greater than the third value, in response to the high temporal correlation categorization. In some embodiments, the first value is one, the second value is two, the third value is four, and the fourth value is eight. In some embodiments, the first value is one, the second value is four, the third value is eight, and the fourth value is sixteen.

In some embodiments, the second plurality of pictures has a number of pictures matching a maximum available group of picture size, the group of picture size is less than the maximum available group of picture size, and process 1100 further includes encoding the subset of the second plurality of pictures using the group of picture size and determining a second group of picture size for at least a second subset of a third plurality of pictures including pictures of the second plurality of pictures exclusive of the subset and temporally subsequent pictures based on a second temporal correlation categorization and a second estimated quantization parameter corresponding to the third plurality of pictures.

Processing continues at operation 1105, where the video is encoded using the group of picture size for at least the subset of the second plurality of pictures to generate a bitstream. Furthermore, one or more indicators of the group of picture size may be coded into the bitstream. The bitstream may be any suitable bitstream such as an AVC compliant bitstream, an HEVC compliant bitstream, a VP9 compliant bitstream, or a AV1 compliant bitstream etc.

Processing continues at operation 1106, where the bitstream is transmitted and/or stored. The bitstream may be transmitted and/or stored using any suitable technique or techniques. In an embodiment, the bitstream is stored in a local memory such as memory 1203. In an embodiment, the bitstream is transmitted for storage at a hosting device such as a server. In an embodiment, the bitstream is transmitted by system 1200 or a server for use by a decoder device.

Process 1100 may be repeated any number of times either in series or in parallel for any number sets of pictures, video segments, or the like. As discussed, process 1100 may provide for video encoding including GOP size selection.

Various components of the systems described herein may be implemented in software, firmware, and/or hardware and/or any combination thereof. For example, various components of the systems or devices discussed herein may be provided, at least in part, by hardware of a computing System-on-a-Chip (SoC) such as may be found in a computing system such as, for example, a smart phone. Those skilled in the art may recognize that systems described herein may include additional components that have not been depicted in the corresponding figures. For example, the systems discussed herein may include additional components such as bit stream multiplexer or de-multiplexer modules and the like that have not been depicted in the interest of clarity.

While implementation of the example processes discussed herein may include the undertaking of all operations shown in the order illustrated, the present disclosure is not limited in this regard and, in various examples, implementation of the example processes herein may include only a subset of the operations shown, operations performed in a different order than illustrated, or additional operations.

In addition, any one or more of the operations discussed herein may be undertaken in response to instructions provided by one or more computer program products. Such program products may include signal bearing media providing instructions that, when executed by, for example, a processor, may provide the functionality described herein. The computer program products may be provided in any form of one or more machine-readable media. Thus, for example, a processor including one or more graphics processing unit(s) or processor core(s) may undertake one or more of the blocks of the example processes herein in response to program code and/or instructions or instruction sets conveyed to the processor by one or more machine-readable media. In general, a machine-readable medium may convey software in the form of program code and/or instructions or instruction sets that may cause any of the devices and/or systems described herein to implement at least portions of the operations discussed herein and/or any portions the devices, systems, or any module or component as discussed herein.

As used in any implementation described herein, the term "module" refers to any combination of software logic, firmware logic, hardware logic, and/or circuitry configured to provide the functionality described herein. The software may be embodied as a software package, code and/or instruction set or instructions, and "hardware", as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. The modules may, collectively or individually, be embodied as circuitry that forms part of a larger system, for example, an integrated circuit (IC), system on-chip (SoC), and so forth.

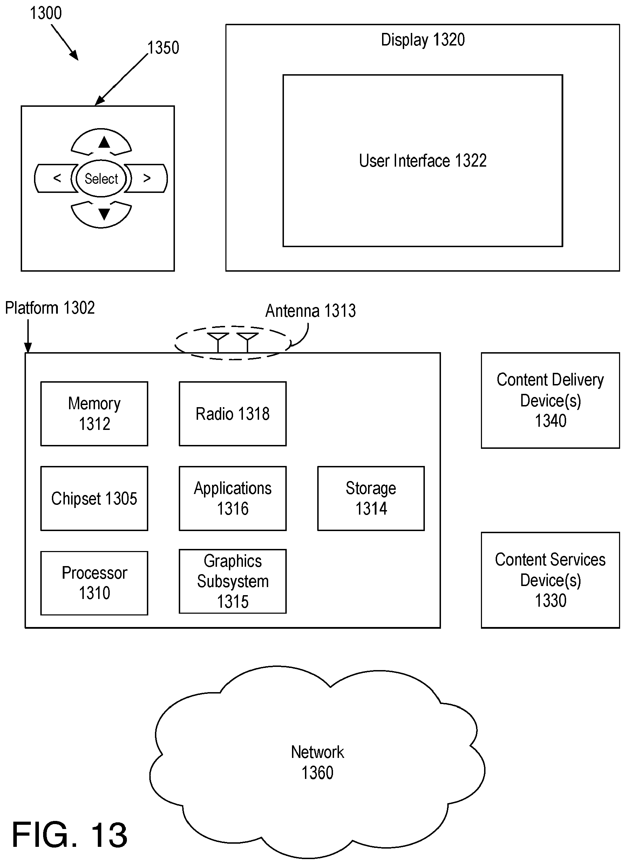

FIG. 13 is an illustrative diagram of an example system 1300, arranged in accordance with at least some implementations of the present disclosure. In various implementations, system 1300 may be a mobile system although system 1300 is not limited to this context. For example, system 1300 maybe incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, cameras (e.g. point-and-shoot cameras, super-zoom cameras, digital single-lens reflex (DSLR) cameras), and so forth.

In various implementations, system 1300 includes a platform 1302 coupled to a display 1320. Platform 1302 may receive content from a content device such as content services device(s) 1330 or content delivery device(s) 1340 or other similar content sources. A navigation controller 1350 including one or more navigation features may be used to interact with, for example, platform 1302 and/or display 1320. Each of these components is described in greater detail below.

In various implementations, platform 1302 may include any combination of a chipset 1305, processor 1310, memory 1312, antenna 1313, storage 1314, graphics subsystem 1315, applications 1316 and/or radio 1318. Chipset 1305 may provide intercommunication among processor 1310, memory 1312, storage 1314, graphics subsystem 1315, applications 1316 and/or radio 1318. For example, chipset 1305 may include a storage adapter (not depicted) capable of providing intercommunication with storage 1314.

Processor 1310 may be implemented as a Complex Instruction Set Computer (CISC) or Reduced Instruction Set Computer (RISC) processors, x86 instruction set compatible processors, multi-core, or any other microprocessor or central processing unit (CPU). In various implementations, processor 1310 may be dual-core processor(s), dual-core mobile processor(s), and so forth.

Memory 1312 may be implemented as a volatile memory device such as, but not limited to, a Random Access Memory (RAM), Dynamic Random Access Memory (DRAM), or Static RAM (SRAM).

Storage 1314 may be implemented as a non-volatile storage device such as, but not limited to, a magnetic disk drive, optical disk drive, tape drive, an internal storage device, an attached storage device, flash memory, battery backed-up SDRAM (synchronous DRAM), and/or a network accessible storage device. In various implementations, storage 1314 may include technology to increase the storage performance enhanced protection for valuable digital media when multiple hard drives are included, for example.

Graphics subsystem 1315 may perform processing of images such as still or video for display. Graphics subsystem 1315 may be a graphics processing unit (GPU) or a visual processing unit (VPU), for example. An analog or digital interface may be used to communicatively couple graphics subsystem 1315 and display 1320. For example, the interface may be any of a High-Definition Multimedia Interface, DisplayPort, wireless HDMI, and/or wireless HD compliant techniques. Graphics subsystem 1315 may be integrated into processor 1310 or chipset 1305. In some implementations, graphics subsystem 1315 may be a stand-alone device communicatively coupled to chipset 1305.

The graphics and/or video processing techniques described herein may be implemented in various hardware architectures. For example, graphics and/or video functionality may be integrated within a chipset. Alternatively, a discrete graphics and/or video processor may be used. As still another implementation, the graphics and/or video functions may be provided by a general purpose processor, including a multi-core processor. In further embodiments, the functions may be implemented in a consumer electronics device.

Radio 1318 may include one or more radios capable of transmitting and receiving signals using various suitable wireless communications techniques. Such techniques may involve communications across one or more wireless networks. Example wireless networks include (but are not limited to) wireless local area networks (WLANs), wireless personal area networks (WPANs), wireless metropolitan area network (WMANs), cellular networks, and satellite networks. In communicating across such networks, radio 1318 may operate in accordance with one or more applicable standards in any version.

In various implementations, display 1320 may include any television type monitor or display. Display 1320 may include, for example, a computer display screen, touch screen display, video monitor, television-like device, and/or a television. Display 1320 may be digital and/or analog. In various implementations, display 1320 may be a holographic display. Also, display 1320 may be a transparent surface that may receive a visual projection. Such projections may convey various forms of information, images, and/or objects. For example, such projections may be a visual overlay for a mobile augmented reality (MAR) application. Under the control of one or more software applications 1316, platform 1302 may display user interface 1322 on display 1320.

In various implementations, content services device(s) 1330 may be hosted by any national, international and/or independent service and thus accessible to platform 1302 via the Internet, for example. Content services device(s) 1330 may be coupled to platform 1302 and/or to display 1320. Platform 1302 and/or content services device(s) 1330 may be coupled to a network 1360 to communicate (e.g., send and/or receive) media information to and from network 1360. Content delivery device(s) 1340 also may be coupled to platform 1302 and/or to display 1320.

In various implementations, content services device(s) 1330 may include a cable television box, personal computer, network, telephone, Internet enabled devices or appliance capable of delivering digital information and/or content, and any other similar device capable of uni-directionally or bi-directionally communicating content between content providers and platform 1302 and/display 1320, via network 1360 or directly. It will be appreciated that the content may be communicated uni-directionally and/or bi-directionally to and from any one of the components in system 1300 and a content provider via network 1360. Examples of content may include any media information including, for example, video, music, medical and gaming information, and so forth.

Content services device(s) 1330 may receive content such as cable television programming including media information, digital information, and/or other content. Examples of content providers may include any cable or satellite television or radio or Internet content providers. The provided examples are not meant to limit implementations in accordance with the present disclosure in any way.

In various implementations, platform 1302 may receive control signals from navigation controller 1350 having one or more navigation features. The navigation features of may be used to interact with user interface 1322, for example. In various embodiments, navigation may be a pointing device that may be a computer hardware component (specifically, a human interface device) that allows a user to input spatial (e.g., continuous and multi-dimensional) data into a computer. Many systems such as graphical user interfaces (GUI), and televisions and monitors allow the user to control and provide data to the computer or television using physical gestures.

Movements of the navigation features of may be replicated on a display (e.g., display 1320) by movements of a pointer, cursor, focus ring, or other visual indicators displayed on the display. For example, under the control of software applications 1316, the navigation features located on navigation may be mapped to virtual navigation features displayed on user interface 1322, for example. In various embodiments, may not be a separate component but may be integrated into platform 1302 and/or display 1320. The present disclosure, however, is not limited to the elements or in the context shown or described herein.

In various implementations, drivers (not shown) may include technology to enable users to instantly turn on and off platform 1302 like a television with the touch of a button after initial boot-up, when enabled, for example. Program logic may allow platform 1302 to stream content to media adaptors or other content services device(s) 1330 or content delivery device(s) 1340 even when the platform is turned "off." In addition, chipset 1305 may include hardware and/or software support for 5.1 surround sound audio and/or high definition 7.1 surround sound audio, for example. Drivers may include a graphics driver for integrated graphics platforms. In various embodiments, the graphics driver may include a peripheral component interconnect (PCI) Express graphics card.

In various implementations, any one or more of the components shown in system 1300 may be integrated. For example, platform 1302 and content services device(s) 1330 may be integrated, or platform 1302 and content delivery device(s) 1340 may be integrated, or platform 1302, content services device(s) 1330, and content delivery device(s) 1340 may be integrated, for example. In various embodiments, platform 1302 and display 1320 may be an integrated unit. Display 1320 and content service device(s) 1330 may be integrated, or display 1320 and content delivery device(s) 1340 may be integrated, for example. These examples are not meant to limit the present disclosure.

In various embodiments, system 1300 may be implemented as a wireless system, a wired system, or a combination of both. When implemented as a wireless system, system 1300 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 1300 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and the like. Examples of wired communications media may include a wire, cable, metal leads, printed circuit board (PCB), backplane, switch fabric, semiconductor material, twisted-pair wire, co-axial cable, fiber optics, and so forth.

Platform 1302 may establish one or more logical or physical channels to communicate information. The information may include media information and control information. Media information may refer to any data representing content meant for a user. Examples of content may include, for example, data from a voice conversation, videoconference, streaming video, electronic mail ("email") message, voice mail message, alphanumeric symbols, graphics, image, video, text and so forth. Data from a voice conversation may be, for example, speech information, silence periods, background noise, comfort noise, tones and so forth. Control information may refer to any data representing commands, instructions or control words meant for an automated system. For example, control information may be used to route media information through a system, or instruct a node to process the media information in a predetermined manner. The embodiments, however, are not limited to the elements or in the context shown or described in FIG. 13.

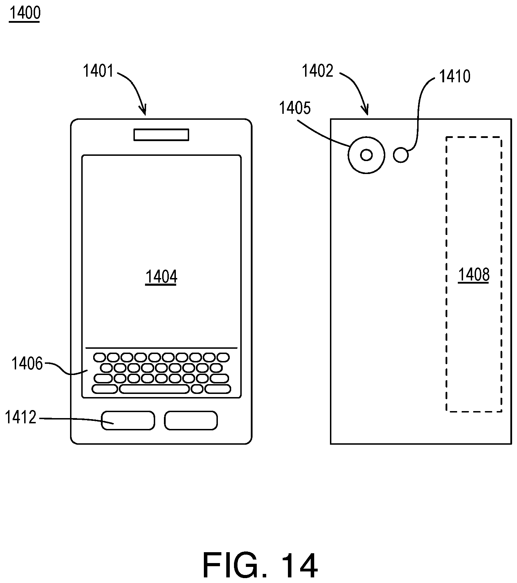

As described above, system 1300 may be embodied in varying physical styles or form factors. FIG. 14 illustrates an example small form factor device 1400, arranged in accordance with at least some implementations of the present disclosure. In some examples, system 1300 may be implemented via device 1400. In other examples, system 100 or portions thereof may be implemented via device 1400. In various embodiments, for example, device 1400 may be implemented as a mobile computing device a having wireless capabilities. A mobile computing device may refer to any device having a processing system and a mobile power source or supply, such as one or more batteries, for example.

Examples of a mobile computing device may include a personal computer (PC), laptop computer, ultra-laptop computer, tablet, touch pad, portable computer, handheld computer, palmtop computer, personal digital assistant (PDA), cellular telephone, combination cellular telephone/PDA, smart device (e.g., smart phone, smart tablet or smart mobile television), mobile internet device (MID), messaging device, data communication device, cameras, and so forth.

Examples of a mobile computing device also may include computers that are arranged to be worn by a person, such as a wrist computers, finger computers, ring computers, eyeglass computers, belt-clip computers, arm-band computers, shoe computers, clothing computers, and other wearable computers. In various embodiments, for example, a mobile computing device may be implemented as a smart phone capable of executing computer applications, as well as voice communications and/or data communications. Although some embodiments may be described with a mobile computing device implemented as a smart phone by way of example, it may be appreciated that other embodiments may be implemented using other wireless mobile computing devices as well. The embodiments are not limited in this context.

As shown in FIG. 14, device 1400 may include a housing with a front 1401 and a back 1402. Device 1400 includes a display 1404, an input/output (I/O) device 1406, and an integrated antenna 1408. Device 1400 also may include navigation features 1412. I/O device 1406 may include any suitable I/O device for entering information into a mobile computing device. Examples for I/O device 1406 may include an alphanumeric keyboard, a numeric keypad, a touch pad, input keys, buttons, switches, microphones, speakers, voice recognition device and software, and so forth. Information also may be entered into device 1400 by way of microphone (not shown), or may be digitized by a voice recognition device. As shown, device 1400 may include a camera 1405 (e.g., including a lens, an aperture, and an imaging sensor) and a flash 1410 integrated into back 1402 (or elsewhere) of device 1400. In other examples, camera 1405 and flash 1410 may be integrated into front 1401 of device 1400 or both front and back cameras may be provided. Camera 1405 and flash 1410 may be components of a camera module to originate image data processed into streaming video that is output to display 1404 and/or communicated remotely from device 1400 via antenna 1408 for example.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as IP cores may be stored on a tangible, machine readable medium and supplied to various customers or manufacturing facilities to load into the fabrication machines that actually make the logic or processor.

In one or more first embodiments, a method for video coding comprises generating, for each picture of a first plurality of pictures of video, a temporal correlation value, each temporal correlation value based on a measure of non-coefficient bits for encoding each picture and a quantization parameter for each picture, wherein the measure of non-coefficient bits comprises all bits for encoding each picture exclusive of transform coefficient bits, determining a temporal correlation categorization of the first plurality of pictures based on a first weighted average of the temporal correlation values, receiving an estimated quantization parameter for a second plurality of pictures of the video, wherein the second plurality of pictures is one of temporally immediately following the first plurality of pictures or temporally at least partially overlapping the first plurality of pictures, determining a group of picture size for at least a subset of the second plurality of pictures based on the temporal correlation categorization of the first plurality of pictures and the estimated quantization parameter for the second plurality of pictures, and encoding the video using the group of picture size to generate a bitstream.

In one or more second embodiments, further to the first embodiments, each temporal correlation value comprises a product of the measure of non-coefficient bits and a resultant value from a monotonically increasing function applied to the quantization parameter, divided by a resolution of the video.

In one or more third embodiments, further to the first or second embodiments, the second plurality of pictures are temporally immediately following the first plurality of pictures, and the method further comprises determining, for each picture of a third plurality of pictures of the video temporally immediately preceding the first plurality of pictures, a second temporal correlation value, each second temporal correlation value based on a measure of non-coefficient bits for encoding each picture and a projected quantization parameter for each picture, wherein the measure of non-coefficient bits comprises all bits for encoding each picture exclusive of transform coefficient bits, wherein generating the temporal correlation categorization for the first plurality of pictures is further based on a second weighted average of the second temporal correlation values.

In one or more fourth embodiments, further to the first through third embodiments, the temporal correlation categorization is very low temporal correlation in response to the first and second weighted averages exceeding a first threshold, low temporal correlation in response to the first and second weighted averages exceeding a second threshold, moderate temporal correlation in response to the first and second weighted averages exceeding a third threshold, or high temporal correlation in response to the first and second weighted averages not exceeding the third threshold, wherein the first threshold is greater than the second threshold, and the second threshold is greater than the third threshold.

In one or more fifth embodiments, further to the first through fourth embodiments, the second plurality of pictures and the third plurality of pictures consist of four pictures each.

In one or more sixth embodiments, further to the first through fifth embodiments, the temporal correlation categorization is very low temporal correlation in response to the first weighted average exceeding a first threshold, low temporal correlation in response to the first weighted average exceeding a second threshold, or moderate temporal correlation in response to the first and second weighted averages exceeding a third threshold, and the group of picture size is a first value in response to a very low temporal correlation categorization or the estimated quantization parameter exceeding a first quantization parameter threshold, a second value in response to a low temporal correlation categorization or the estimated quantization parameter exceeding a second quantization parameter threshold, or a third value in response to a moderate temporal correlation categorization, wherein the first value is less than the second value, the second value is less than the third value, and the first quantization parameter threshold is greater than the second quantization parameter threshold.

In one or more seventh embodiments, further to the first through sixth embodiments, the first value is one, the second value is two, and the third value is four.

In one or more eighth embodiments, further to the first through seventh embodiments, the temporal correlation categorization is high temporal correlation in response to the first weighted average not exceeding the third threshold, and the group of picture size is a fourth value, greater than the third value, in response to the high temporal correlation categorization.

In one or more ninth embodiments, further to the first through eighth embodiments, the second plurality of pictures is at least partially temporally overlapping the first plurality of pictures and the measure of non-coefficient bits for encoding each picture is generated by downsampling each of the first plurality of pictures in the horizontal and vertical directions and encoding each of the downsampled first plurality of pictures via a constant quantization parameter encode.

In one or more tenth embodiments, the first and second plurality of pictures are the same plurality of pictures.

In one or more eleventh embodiments, further to the first through tenth embodiments, further to the first through ninth embodiments, the second plurality of pictures has a number of pictures matching a maximum available group of picture size, the group of picture size is less than the maximum available group of picture size, and the method further comprises encoding the subset of the second plurality of pictures using the group of picture size and determining a second group of picture size for at least a second subset of a third plurality of pictures including pictures of the second plurality of pictures exclusive of the subset and temporally subsequent pictures based on a second temporal correlation categorization and a second estimated quantization parameter corresponding to the third plurality of pictures.

In one or more twelfth embodiments, further to the first through eleventh embodiments, all bits for encoding each picture exclusive of the transform coefficient bits comprise block partitioning bits, block prediction mode bits, motion vector bits, picture parameter set bits, and header bits

In one or more thirteenth embodiments, a device or system includes a memory and a processor to perform a method according to any one of the above embodiments.

In one or more fourteenth embodiments, at least one machine readable medium includes a plurality of instructions that in response to being executed on a computing device, cause the computing device to perform a method according to any one of the above embodiments.

In one or more fifteenth embodiments, an apparatus may include means for performing a method according to any one of the above embodiments.

While certain features set forth herein have been described with reference to various implementations, this description is not intended to be construed in a limiting sense. Hence, various modifications of the implementations described herein, as well as other implementations, which are apparent to persons skilled in the art to which the present disclosure pertains are deemed to lie within the spirit and scope of the present disclosure.

It will be recognized that the embodiments are not limited to the embodiments so described, but can be practiced with modification and alteration without departing from the scope of the appended claims. For example, the above embodiments may include specific combination of features. However, the above embodiments are not limited in this regard and, in various implementations, the above embodiments may include the undertaking only a subset of such features, undertaking a different order of such features, undertaking a different combination of such features, and/or undertaking additional features than those features explicitly listed. The scope of the embodiments should, therefore, be determined with reference to the appended claims, along with the full scope of equivalents to which such claims are entitled.

**Claims**

1. A computer-implemented method for video coding comprising:

   generating, for each picture of a first plurality of pictures of video, a temporal correlation value, each temporal correlation value based on a measure of non-coefficient bits for encoding each picture and a quantization parameter for each picture, wherein the measure of non-coefficient bits comprises all bits for encoding each picture exclusive of transform coefficient bits;
   determining a temporal correlation categorization of the first plurality of pictures based on a first weighted average of the temporal correlation values;
   receiving an estimated quantization parameter for a second plurality of pictures of the video, wherein the second plurality of pictures is one of temporally immediately following the first plurality of pictures or temporally at least partially overlapping the first plurality of pictures;
   determining a group of picture size for at least a subset of the second plurality of pictures based on the temporal correlation categorization of the first plurality of pictures and the estimated quantization parameter for the second plurality of pictures; and
   encoding the video using the group of picture size to generate a bitstream.

2. The method of claim 1, wherein each temporal correlation value comprises a product of the measure of non-coefficient bits and a resultant value from a monotonically increasing function applied to the quantization parameter, divided by a resolution of the video.

3. The method of claim 1 or 2, wherein the second plurality of pictures are temporally immediately following the first plurality of pictures, and the method further comprises:

   determining, for each picture of a third plurality of pictures of the video temporally immediately preceding the first plurality of pictures, a second temporal correlation value, each second temporal correlation value based on a measure of non-coefficient bits for encoding each picture and a projected quantization parameter for each picture, wherein the measure of non-coefficient bits comprises all bits for encoding each picture exclusive of transform coefficient bits,
   wherein generating the temporal correlation categorization for the first plurality of pictures is further based on a second weighted average of the second temporal correlation values.

4. The method of claim 3, wherein the temporal correlation categorization is very low temporal correlation in response to the first and second weighted averages exceeding a first threshold, low temporal correlation in response to the first and second weighted averages exceeding a second threshold, moderate temporal correlation in response to the first and second weighted averages exceeding a third threshold, or high temporal correlation in response to the first and second weighted averages not exceeding the third threshold, wherein the first threshold is greater than the second threshold, and the second threshold is greater than the third threshold.

5. The method of claim 3, wherein the second plurality of pictures and the third plurality of pictures consist of four pictures each.

6. The method of any of claims claim 1 to 5, wherein the temporal correlation categorization is very low temporal correlation in response to the first weighted average exceeding a first threshold, low temporal correlation in response to the first weighted average exceeding a second threshold, or moderate temporal correlation in response to the first and second weighted averages exceeding a third threshold, and
   wherein the group of picture size is a first value in response to a very low temporal correlation categorization or the estimated quantization parameter exceeding a first quantization parameter threshold, a second value in response to a low temporal correlation categorization or the estimated quantization parameter exceeding a second quantization parameter threshold, or a third value in response to a moderate temporal correlation categorization, wherein the first value is less than the second value, the second value is less than the third value, and the first quantization parameter threshold is greater than the second quantization parameter threshold.

7. The method of claim 6, wherein the first value is one, the second value is two, and the third value is four.

8. The method of claim 6, wherein the temporal correlation categorization is high temporal correlation in response to the first weighted average not exceeding the third threshold, and wherein the group of picture size is a fourth value, greater than the third value, in response to the high temporal correlation categorization.

9. The method of claim 1 or 2, wherein the second plurality of pictures is at least partially temporally overlapping the first plurality of pictures and wherein the measure of non-coefficient bits for encoding each picture is generated by:

   downsampling each of the first plurality of pictures in the horizontal and vertical directions; and
   encoding each of the downsampled first plurality of pictures via a constant quantization parameter encode.

10. The method of claim 9, wherein the first and second plurality of pictures are the same plurality of pictures.

11. The method of claim 1, wherein the second plurality of pictures has a number of pictures matching a maximum available group of picture size, the group of picture size is less than the maximum available group of picture size, and the method further comprises:

   encoding the subset of the second plurality of pictures using the group of picture size; and
   determining a second group of picture size for at least a second subset of a third plurality of pictures including pictures of the second plurality of pictures exclusive of the subset and temporally subsequent pictures based on a second temporal correlation categorization and a second estimated quantization parameter corresponding to the third plurality of pictures.

12. The method of any of claims 1 to 11, wherein all bits for encoding each picture exclusive of the transform coefficient bits comprise block partitioning bits, block prediction mode bits, motion vector bits, picture parameter set bits, and header bits.

13. The method of any of claims 1 to 12, wherein the bitstream comprises a codec standards compliant bitstream compliant to at least one of Advanced Video Coding (AVC), High Efficiency Video Coding (HEVC), VP9, or AV1.

14. An apparatus, comprising means for performing a method as claimed in any preceding claim.

15. Machine-readable storage including machine-readable instructions which, when executed, implement a method or realize an apparatus as claimed in any preceding claim.

FIG. 1

110

112/116 ——▶ $T_{N-7}$ $T_{N-6}$ $T_{N-5}$ $T_{N-4}$ $T_{N-3}$ $T_{N-2}$ $T_{N-1}$ $T_N$ $T_{N+1}$ $T_{N+2}$ $T_{N+3}$ $T_{N+4}$ $T_{N+5}$ $T_{N+6}$ $T_{N+7}$ $T_{N+8}$

$P_{N-7}$ $P_{N-6}$ $P_{N-5}$ $P_{N-4}$ $P_{N-3}$ $P_{N-2}$ $P_{N-1}$ $P_N$ $P_{N+1}$ $P_{N+2}$ $P_{N+3}$ $P_{N+4}$ $P_{N+5}$ $P_{N+6}$ $P_{N+7}$ $P_{N+8}$

201                        202

# FIG. 2

201                          202

112/116 ——▶ $T_{N-7}$ $T_{N-6}$ $T_{N-5}$ $T_{N-4}$ $T_{N-3}$ $T_{N-2}$ $T_{N-1}$ $T_N$ $T_{N+1}$ $T_{N+2}$ $T_{N+3}$ $T_{N+4}$ $T_{N+5}$ $T_{N+6}$ $T_{N+7}$ $T_{N+8}$

WA2 302        WA1 301

$QP_E$ —— 111

TC Categorization
303

GOP Size
114

# FIG. 3

400

```
┌─────────────────────────────┐
│ Determine Non-Coefficient   │
│  Bits and QP for Each       │──401
│       Picture of Set        │
└─────────────────────────────┘
              │
              ▼
┌─────────────────────────────┐
│ Generate Temporal           │
│  Correlation Value          │──402
│  for Each Picture of Set    │
└─────────────────────────────┘
              │
              ▼
┌─────────────────────────────┐
│ Determine First (WA1) and   │
│ Second (WA2) Weighted       │
│ Averages of Temporal        │──403
│ Correlation Values for      │
│ Temporally Adjacent         │
│ Subsets of Pictures         │
└─────────────────────────────┘
              │
              ▼
```

404 ◇ WA1& WA2>C1? —Y→ Very Low Temporal Correlation Categorization 405

N

406 ◇ WA1& WA2>C2? —Y→ Low Temporal Correlation Categorization 407

N

408 ◇ WA1& WA2>C3? —Y→ Moderate Temporal Correlation Categorization 409

N

410 High Temporal Correlation Categorization

# FIG. 4

<u>500</u>

FIG. 5

600

601 602 603 604 605 606 607 608 609

Random Access with GOP=8

# FIG. 6

700

701 702 703 704 705 706 707 708 709

Random Access with GOP=4

# FIG. 7

800

801   802   803   804   805   806   807   808   809

Random Access with GOP=2

# FIG. 8

900

901   902   903   904   905   906   907   908   909

Random Access with GOP=1

# FIG. 9

110

1001

1002

P$_{N-3}$  P$_{N-2}$  P$_{N-1}$  P$_N$  P$_{N+1}$  P$_{N+2}$  P$_{N+3}$  P$_{N+4}$  P$_{N+5}$  P$_{N+6}$  P$_{N+7}$  P$_{N+8}$  P$_{N+9}$  P$_{N+10}$ P$_{N+11}$ P$_{N+12}$

WA2 1022          WA1 1021

1011

QP$_E$

TC Categorization
1003

GOP Size
1014

# FIG. 10

1100
┌─────────────────────────────────────────────────────────┐
│ Generate Temporal Correlation Values for First Plurality of │
│ Pictures of Video based on Measure of Non-Coefficient Bits │─── 1101
│ and Quantization Parameter for Each Picture │
└─────────────────────────────────────────────────────────┘
                              ↓
┌─────────────────────────────────────────────────────────┐
│ Determine Temporal Categorization for the First Pictures based │
│ on a Weighted Average of the Temporal Correlation Values │─── 1102
└─────────────────────────────────────────────────────────┘
                              ↓
┌─────────────────────────────────────────────────────────┐
│ Receive Estimated Quantization Parameter for Second Plurality │
│ of Pictures that are Temporally Immediately Prior to or │─── 1103
│ Temporally Overlapping the First Plurality of Pictures │
└─────────────────────────────────────────────────────────┘
                              ↓
┌─────────────────────────────────────────────────────────┐
│ Determine Group of Picture (GOP) Size for at least a Subset of │
│ the Second Plurality of Pictures based on the Temporal │
│ Correlation Categorization and Estimated Quantization │─── 1104
│ Parameter │
└─────────────────────────────────────────────────────────┘
                              ↓
┌─────────────────────────────────────────────────────────┐
│ Encode the Video using the GOP Size to Generate a Bitstream │─── 1105
└─────────────────────────────────────────────────────────┘
                              ↓
┌─────────────────────────────────────────────────────────┐
│ Transmit or Store Bitstream │─── 1106
└─────────────────────────────────────────────────────────┘

# FIG. 11

┌──────────────────────────────────────────────────────────────────────┐
│ Video Processor 1202 │
│ ┌──────────┐ ┌──────────┐ ┌──────────┐ ┌──────────┐ ┌──────────┐ │
│ │ Current &│ │ │ │ Adaptive │ │ │ │ │ │
│ │Look Ahead│ │ History │ │ GOP │ │ Rate Control │ │ Encoder │ │
│ │ Video │ │ Video │ │ Decision │ │ 104 │ │ 105 │ │
│ │ Analysis │ │ Analysis │ │ 103 │ │ │ │ │ │
│ │ 101 │ │ 102 │ │ │ │ │ │ │ │
│ └──────────┘ └──────────┘ └──────────┘ └──────────┘ └──────────┘ │
│ ┌──────────────────────────┐ ┌──────────────────────────┐ │
│ │ Central Processor │ │ Memory │ │
│ │ 1201 │ │ 1203 │ │
│ └──────────────────────────┘ └──────────────────────────┘ │
│ System 1200 │
└──────────────────────────────────────────────────────────────────────┘

# FIG. 12

1300

1350

Display 1320

User Interface 1322

Platform 1302

Antenna 1313

Memory 1312

Radio 1318

Chipset 1305

Applications 1316

Storage 1314

Processor 1310

Graphics Subsystem 1315

Content Delivery Device(s) 1340

Content Services Device(s) 1330

Network 1360

FIG. 13

1400

1401

1402  1410

1405

1404

1408

1406

1412

# FIG. 14

Europäisches
Patentamt

European
Patent Office

Office européen
des brevets

## EUROPEAN SEARCH REPORT

**Application Number**

EP 20 16 5941

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 654 298 A2 (VIXS SYSTEMS INC [CA]) 23 October 2013 (2013-10-23) * paragraphs [0015], [0017], [0021], [0025] * * paragraph [0028] - paragraph [0031]; figure 4 * | 1,13-15 | INV. H04N19/114 H04N19/124 H04N19/136 H04N19/142 H04N19/146 H04N19/172 H04N19/177 |
| Y | US 2013/156098 A1 (SCHWARTZ MAYER D [US] ET AL) 20 June 2013 (2013-06-20) * paragraphs [0021], [0078] * * paragraph [0036] - paragraph [0049]; figures 1,2 * | 1,13-15 | |
| Y | EP 3 376 766 A1 (AXIS AB [SE]) 19 September 2018 (2018-09-19) * paragraph [0012] * * paragraph [0038] - paragraph [0041]; figures 4,5 * | 1,13-15 | |
| A | US 2016/198166 A1 (KUDANA ARUN SHANKAR [IN] ET AL) 7 July 2016 (2016-07-07) * paragraph [0030] - paragraph [0033] * | 1-15 | |
| A | US 2017/214938 A1 (ZHANG XIMIN [US] ET AL) 27 July 2017 (2017-07-27) * paragraph [0022] * * paragraph [0030] - paragraph [0040]; figure 1 * | 1-15 | TECHNICAL FIELDS SEARCHED (IPC) H04N |
| X,P | US 2019/349585 A1 (ZHANG XIMIN [US] ET AL) 14 November 2019 (2019-11-14) * the whole document * | 1-15 | |

The present search report has been drawn up for all claims

| Place of search | Date of completion of the search | Examiner |
|---|---|---|
| The Hague | 26 August 2020 | Georgiou, Georgia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 20 16 5941

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2020

| Patent document cited in search report | | Publication date | Patent family member(s) | | Publication date |
|---|---|---|---|---|---|
| EP 2654298 | A2 | 23-10-2013 | CN | 103379335 A | 30-10-2013 |
| | | | EP | 2654298 A2 | 23-10-2013 |
| | | | US | 2013279563 A1 | 24-10-2013 |
| US 2013156098 | A1 | 20-06-2013 | US | 2013156098 A1 | 20-06-2013 |
| | | | US | 2015334395 A1 | 19-11-2015 |
| | | | US | 2017078666 A1 | 16-03-2017 |
| | | | WO | 2013096259 A2 | 27-06-2013 |
| EP 3376766 | A1 | 19-09-2018 | CN | 108574843 A | 25-09-2018 |
| | | | EP | 3376766 A1 | 19-09-2018 |
| | | | US | 2018270482 A1 | 20-09-2018 |
| US 2016198166 | A1 | 07-07-2016 | US | 2016198166 A1 | 07-07-2016 |
| | | | US | 2018324443 A1 | 08-11-2018 |
| US 2017214938 | A1 | 27-07-2017 | CN | 108432253 A | 21-08-2018 |
| | | | US | 2017214938 A1 | 27-07-2017 |
| | | | WO | 2017127167 A1 | 27-07-2017 |
| US 2019349585 | A1 | 14-11-2019 | NONE | | |

EPO FORM P0459

For more details about this annex : see Official Journal of the European Patent Office, No. 12/82